# FASCICULE DE BREVET EUROPEEN

(11) **EP 1 059 480 B1**
(45) Date de publication et mention de la délivrance du brevet: **03.12.2003**
(21) Numéro de dépôt: 00420119.0
(22) Date de dépôt: 07.06.2000
(51) Int. Cl.: F16L 37/084

(54) **Raccord rapide de sécurité pour la jonction amovible de canalisations et éléments constitutifs d'un tel raccord**
Sicherheitsschnellkupplung für lösbare Verbindung von Rohrleitungen, Bauteile dafür
Quick acting safety coupling for the disconnectable connection of pipe lines and component parts therefor

(30) Priorité: 08.06.1999 FR 9907456
(43) Date de publication de la demande: 13.12.2000
(73) Titulaire: STÄUBLI FAVERGES, 74210 Faverges (FR)
(72) Inventeur: Lacroix, Jean-Jacques, 74330 Lovagny (FR); Laporte, Christophe, 74960 Cran Gevrier (FR)
(74) Mandataire: Myon, Gérard Jean-Pierre

(56) Documents cités:
- DE-U- 29 514 822
- FR-A- 2 515 306
- FR-A- 2 729 454

## Description

L'invention a trait à un raccord rapide de sécurité pour la jonction amovible de canalisations.

Il est connu, par exemple de FR-A-2 729 454, de réaliser un raccord rapide comprenant un embout mâle et un élément femelle équipé d'un fourreau de manoeuvre commandant des griffes de verrouillage de l'embout mâle à l'intérieur de l'élément femelle. Dans ce genre de dispositif, l'élément femelle renferme l'ensemble des éléments de verrouillage, alors que l'embout mâle porte uniquement une gorge externe dans laquelle sont destinées à venir en prise les griffes de l'élément femelle. Dans les dispositifs de l'état de la technique, la complexité mécanique de l'élément femelle diminue sa fiabilité, alors que sa fabrication est relativement onéreuse et que les matériaux à utiliser doivent être nobles, tels que par exemple de l'acier trempé.

Pour certaines applications, l'élément femelle doit subir un grand nombre de cycles d'accouplement et de désaccouplement, alors que l'embout mâle n'est utilisé que pour quelques cycles d'accouplement/désaccouplement.

Par exemple, il peut être prévu, sur une chaîne de montage de véhicules automobiles, une station de remplissage des circuits fluides d'un véhicule au moyen de lignes comprenant des raccords rapides. Dans ce cas, l'un des éléments du raccord rapide qui est stationnaire dans l'installation est destiné à être accouplé avec un grand nombre d'éléments solidaires chacun d'un véhicule. Le raccord stationnaire doit être prévu pour plus de 100 000 cycles d'accouplement/désaccouplement, alors que l'élément monté sur le véhicule automobile n'est destiné à être utilisé que quelques fois dans la durée de vie du véhicule, par exemple tous les 10 000 ou 20 000 km.

De la même manière, on peut envisager d'utiliser des raccords rapides pour connecter un bloc moteur de véhicule automobile à un banc d'essai. Les éléments de raccord solidaires du banc d'essai doivent subir un grand nombre de cycles d'accouplement/désaccouplement alors que les éléments solidaires du moteur sont utilisés une seule fois ou un petit nombre de fois.

Pour les applications mentionnées ci-dessus, il importe de fiabiliser au maximum l'élément de raccord destiné à être stationnaire tout en conservant un système de verrouillage efficace pouvant être manoeuvré de façon instinctive, notamment grâce à un fourreau.

Dans cet esprit, l'invention concerne un raccord rapide de sécurité pour la jonction amovible de canalisations selon la revendication 1.

L'invention prend le contre-pied des habitudes du domaine technique des raccords rapides, en ce sens qu'elle tend à complexifier l'un des éléments, qui peut être l'embout mâle, en y incorporant une ou plusieurs griffes de verrouillage, alors qu'il est courant d'utiliser des embouts mâles standard comportant uniquement une gorge périphérique de verrouillage. Ces griffes de verrouillage présentes sur le second élément servent un nombre restreint de fois, d'où une usure limitée et la possibilité de les réaliser en matière plastique. Par ailleurs, le premier élément peut être simplifié et comprend, pour l'essentiel, des pièces de révolution.

Selon des aspects avantageux mais non obligatoires de l'invention, le raccord incorpore une ou plusieurs des caractéristiques suivantes :
- Le second élément comprend plusieurs griffes réparties autour d'un axe central du second élément. Ceci permet de répartir l'effort de verrouillage obtenu autour de cet axe.
- Le raccord comprend des moyens de charge élastique de la bague vers une position où elle verrouille la griffe dans la gorge. Ainsi, en l'absence d'effort exercé par un opérateur, la griffe est maintenue en position verrouillée. Dans ce cas, la bague se prolonge avantageusement par une jupe apte à entourer un logement formé sur une surface externe d'un corps du premier élément pour la réception d'un ressort de rappel de la bague en position de verrouillage de la griffe. On peut également prévoir que le fourreau porte une butée interne vers laquelle la bague est poussée par les moyens de charge élastique. Dans ce cas, la bague est avantageusement pourvue d'une collerette radiale externe apte à venir en appui simple contre la butée du fourreau.
- La griffe est formée de façon monobloc avec un corps du second élément. Cet aspect de l'invention tire parti du fait qu'il est possible de réaliser la griffe en matière plastique, notamment injectée. Le caractère monobloc permet de limiter le nombre de pièces constitutives de ce second élément, y compris lorsque celui-ci comprend plusieurs griffes.
- Le second élément comprend une jupe périphérique apte à entourer une partie du premier élément en position accouplée des premier et second éléments. Cette jupe assure une fonction d'isolation et de protection mécanique contre ces salissures.
- La griffe est pourvue d'un chanfrein externe d'extrémité alors que la bague est pourvue d'un chanfrein orienté vers l'intérieur, ces chanfreins étant aptes à venir en contact glissant l'un contre l'autre lors de l'accouplement des premier et second éléments.
- La griffe est pourvue d'un chanfrein interne d'extrémité alors qu'un corps du premier élément est pourvu d'une surface formant rampe inclinée apte à coopérer avec le chanfrein pour expandre radialement cette griffe lors de l'accouplement des premier et second éléments.

L'invention concerne également un élément de raccord rapide, pouvant appartenir au raccord tel que précédemment décrit, selon la revendication 11.

L'invention concerne enfin un second élément de raccord rapide, apte à coopérer avec l'élément mentionné ci-dessus, selon la revendication 12.

L'invention sera mieux comprise et d'autres avantages de celle-ci apparaîtront plus clairement à la lumière de la description qui va suivre d'un mode de réalisation d'un raccord rapide conforme à son principe, donnée uniquement à titre d'exemple et faite en référence aux dessins annexés dans lesquels :
- la figure 1 est une coupe axiale des deux éléments d'un raccord rapide conforme à l'invention avant accouplement ;
- la figure 2 est une vue en perspective de l'embout mâle du raccord de la figure 1, on y a indiqué en I-I le plan de coupe de la figure 1 ;
- la figure 3 est une coupe axiale partielle du raccord de la figure 1 lors d'une première étape d'accouplement ;
- la figure 4 est une vue analogue à la figure 3 lors d'une seconde étape d'accouplement ;
- la figure 5 est une vue analogue à la figure 3 lorsque les éléments constitutifs du raccord sont accouplés et
- la figure 6 est une vue analogue à la figure 3 lors du désaccouplement des éléments constitutifs du raccord.

Le raccord rapide représenté sur les figures comprend un élément femelle A et un élément mâle B prévus l'un et l'autre avec une forme globalement tubulaire. La partie arrière de l'élément femelle A est raccordé fluidiquement à une canalisation C₁. De la même manière, la partie arrière de l'élément mâle B est raccordée à une seconde canalisation C₂. La canalisation C₁ est stationnaire alors que la canalisation C₂ est solidaire d'un appareil ou d'un système faisant partie d'une série d'appareils ou de systèmes devant être raccordés sur la canalisation C₁. Ainsi, l'élément femelle A est destiné à coopérer successivement avec différents éléments mâles B, éventuellement en grand nombre.

L'élément femelle A comprend un corps principal tubulaire 1 pourvu d'un filetage interne 1a à l'intérieur duquel est vissé un filetage externe 2a d'un corps secondaire tubulaire 2. On note X₁ l'axe de symétrie des corps 1 et 2. Le corps 2 immobilise un poussoir fixe 3 contre un épaulement interne 1b du corps 1. Un clapet 4 est disposé autour du poussoir 3 à l'intérieur du corps secondaire 2 et comprend une collerette 4a apte à venir en appui contre un épaulement interne 2b du corps 2 sous l'effet d'un effort de rappel élastique F₅ généré par un ressort 5 disposé entre le poussoir 3 et le clapet 4.

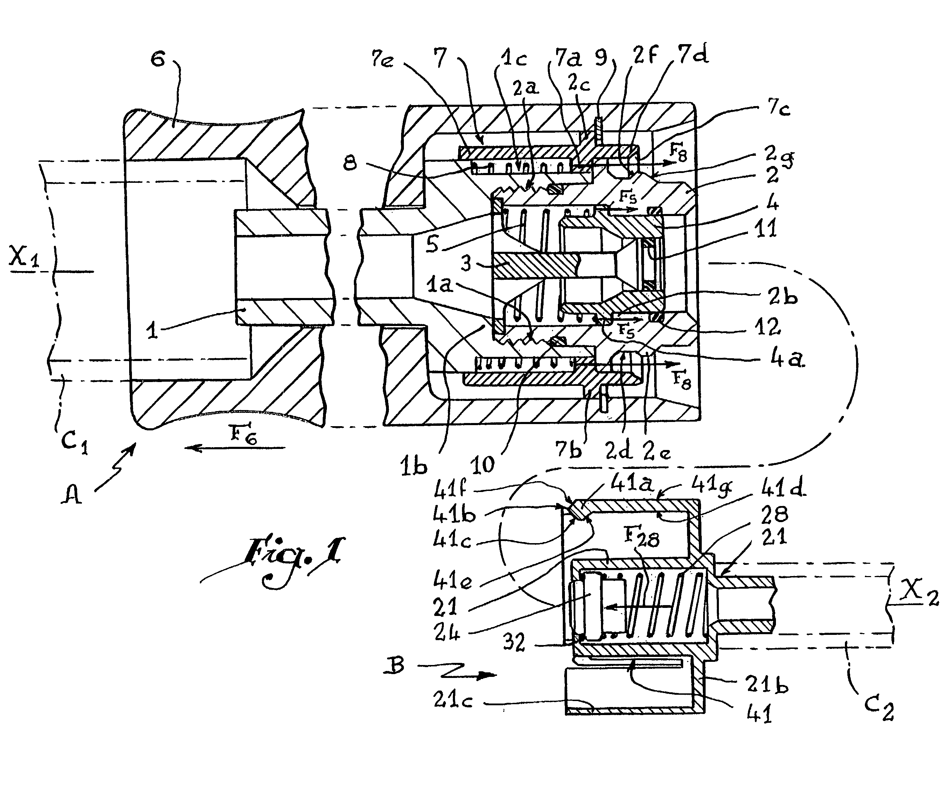

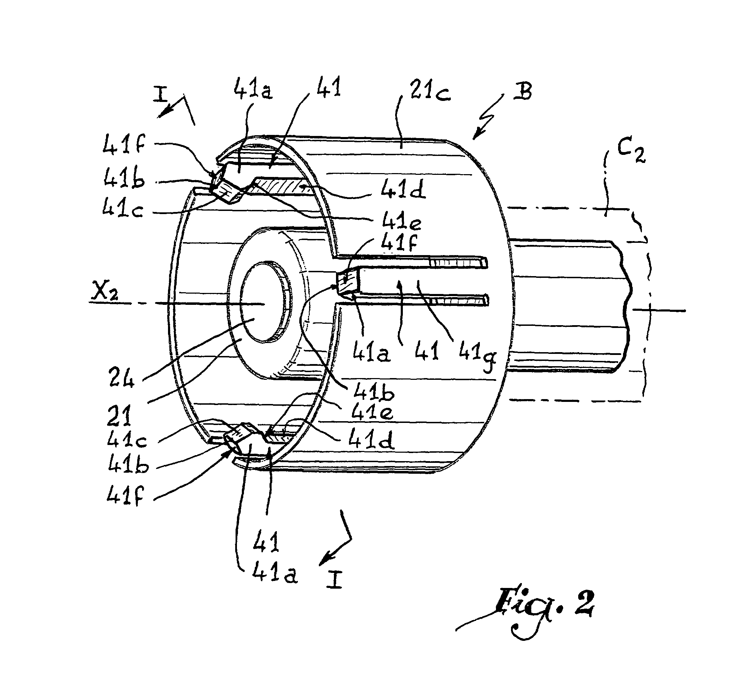

Un fourreau 6 est prévu autour du corps 2. Le fourreau 6 est apte à être déplacé par rapport au corps 1, à partir de sa position de la figure 1, dans le sens de la flèche F₆. Une bague 7 est disposée autour du corps 1 et à l'intérieur du fourreau 6. Cette bague 7 comprend une collerette interne 7a et une collerette externe 7b.

La collerette 7a est prévue pour venir en appui contre une collerette externe 2c du corps 2 sous l'effet d'un effort de rappel élastique F₈ généré par un ressort 8 qui est reçu dans un logement 1c formé sur la surface radiale externe du corps 1.

La collerette externe 7b de la bague 7 est prévue pour venir en appui simple contre un circlips 9 solidaire du fourreau 6. Ainsi, sous l'effet de l'effort F₈, la bague 7 est repoussée contre la collerette externe 2c du corps 2 et le fourreau 6 est repoussé vers la droite de la figure 1, dans le sens opposé à la flèche F₆.

Une gorge radiale 2d est ménagée en périphérie du corps 2 entre la collerette 2c et une seconde collerette 2e dont les surfaces latérales 2f et 2g sont tronconiques et centrées sur l'axe X₁. Ainsi, ces surfaces 2f et 2g sont inclinées par rapport à l'axe central X₁ dans le plan de coupe des figures 1 et 3 à 6.

Des joints toriques 10, 11 et 12 sont respectivement disposés entre les corps 1 et 2, entre le poussoir 3 et le clapet 4, et entre le clapet 4 et le corps 2.

L'ensemble des éléments constitutifs de l'élément A est à symétrie de révolution autour de l'axe X₁.

L'élément mâle B comprend un corps monobloc 21 à l'intérieur duquel est disposé un clapet 24 équipé d'un joint d'étanchéité 32 et chargé élastiquement par un effort F₂₈ en direction d'un siège 21a formé au débouché du corps 21. L'effort F₂₈ est généré par un ressort 28 disposé à l'intérieur du corps 21.

Le corps 21 comprend une partie annulaire 21b globalement perpendiculaire à son axe central X₂. Sur la plus grande partie de sa circonférence, la partie annulaire 21 se prolonge par une jupe 21c tournée vers l'avant de l'élément mâle B, c'est-à-dire en direction de l'élément femelle A dans la configuration des figures 1 et 3 à 6.

Dans trois zones régulièrement réparties autour de l'axe X₂, la jupe 21c est interrompue et il est formé trois griffes 41 monobloc avec la partie annulaire 21b du corps 21 et s'étendant en direction de l'avant de l'élément B, c'est-à-dire en direction de l'élément A dans la position des figures 1 et 3 à 6. Chaque griffe 41 comprend un nez 41a dirigé vers l'axe X₂ et raccordé au bord avant 41b de la griffe 41 par une surface 41c inclinée vers l'arrière de l'élément B par rapport à l'axe X₂. Le nez 41a est relié à la surface interne 41d de la griffe 41 par une seconde surface inclinée 41e. Enfin, un chanfrein est formé par une surface inclinée 41f reliant le bord 41b à la surface externe 41g de la dent 41.

La jupe 21c sert à protéger les griffes de chocs ou de sollicitations mécaniques qui pourraient se produire lors de l'accouplement des éléments A et B.

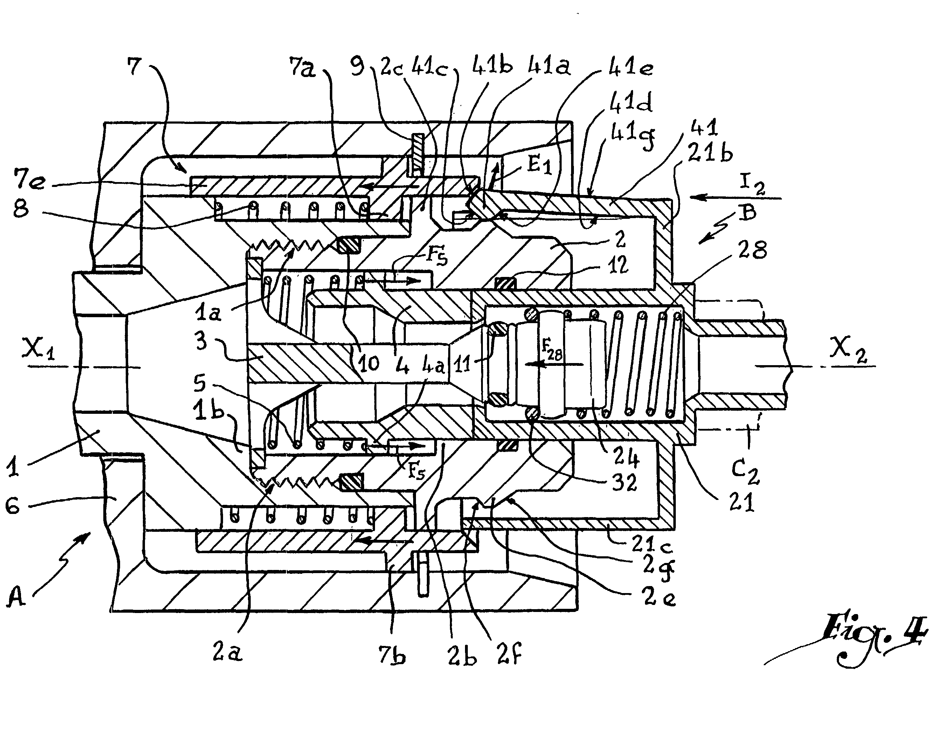

L'accouplement des éléments A et B est décrit en référence aux figures 3 à 6. Lorsqu'on approche l'élément B de l'élément A, le bord avant 21d du corps 21 pénètre dans le corps 2 et repousse le clapet 4 à l'encontre de la force F₅ du ressort 5, comme représenté à la figure 3. Comme le poussoir 3 est fixe, il déplace le clapet 24 à l'intérieur du corps 21 à l'encontre de l'effort de rappel F₂₈ du ressort 28. L'extrémité avant de chaque griffe 41 vient en appui contre la collerette 2e du corps 2. Plus précisément, la surface 41c de chaque griffe 41 est plaquée contre la surface inclinée 2g de la collerette 2e.

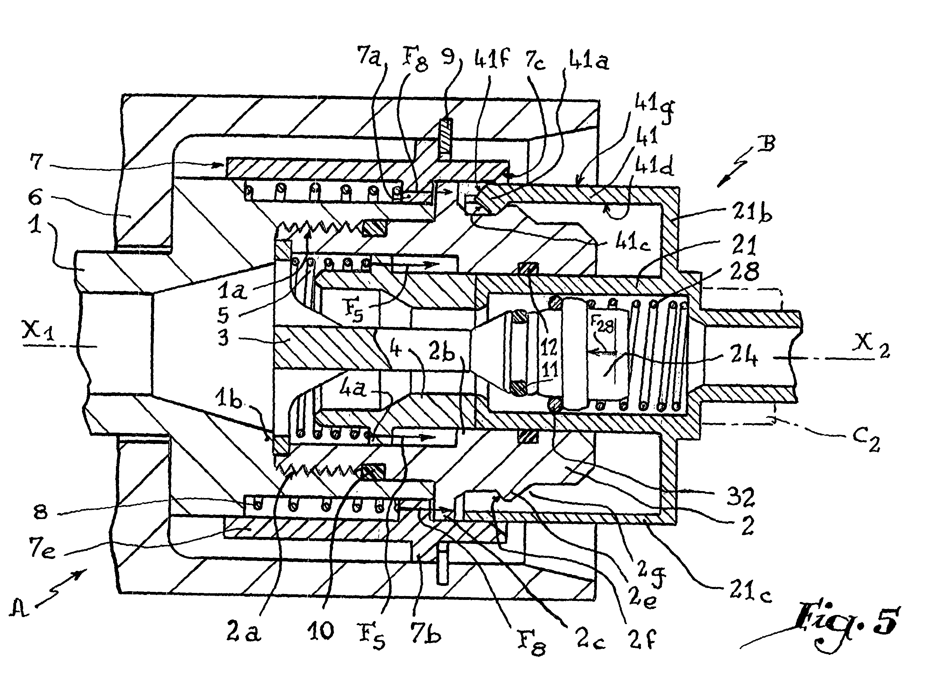

Lorsqu'on poursuit le mouvement d'introduction de l'élément mâle B à l'intérieur de l'élément femelle A, comme représenté par les flèches I₁ et I₂ aux figures 3 et 4, la surface 41c de la dent 41 progresse le long de la surface 2g de la collerette 2 qui forme une rampe d'expansion radiale de la griffe 41, de telle sorte que la griffe 41 est déformée élastiquement radialement vers l'extérieur, comme représenté par la flèche E₁ à la figure 4.

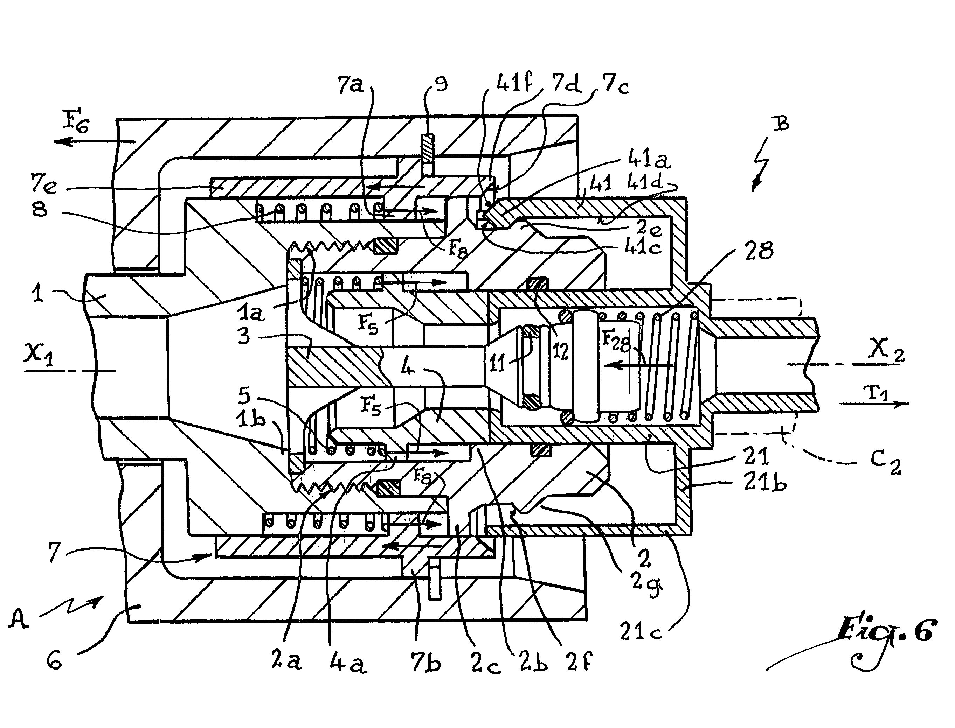

Dans cette position, la surface 41f de la griffe 41 vient en regard d'une surface tronconique 7c du bord avant 7d de la bague 7 inclinée vers l'arrière de l'élément A en direction de l'axe X₁, les surfaces 41f et 7c étant globalement parallèles et formant des chanfreins correspondants. La surface 7c forme ainsi un cône contre lequel la surface 41f de chacune des pattes 41 peut venir en appui glissant lors du passage de la configuration de la figure 4 à celle de la figure 5. Sans intervention de l'opérateur sur le fourreau 6, les surfaces 41f et 7c viennent en appui l'une contre l'autre et la bague 7 est repoussée à l'encontre de l'effort F₈ par les griffes 41, la surface 41f de chaque griffe 41 glisse contre la surface 7c en direction du corps 2, de telle sorte que le nez 41a de chacune des griffes 41 s'engage dans la gorge 2d. Si l'opérateur repousse le fourreau 6 vers l'arrière dans le sens de la flèche F₆, la bague 7 est escamotée et laisse le passage en direction de la gorge 2d libre pour les dents 41, les surfaces 41f et 7c n'entrant alors pas en contact.

Dans la position de la figure 5, la surface 41e de chaque griffe 41 est en appui contre la surface tronconique 2f de la collerette 2e, alors que la bague 7 empêche d'extraire chaque dent 41 de la gorge 2d, d'où un verrouillage efficace du raccord en position accouplée. La partie arrière de la bague 7, c'est-à-dire sa partie opposée à son bord avant 7d, forme une jupe 7e qui entoure en permanence le ressort 8 et le logement lc. Ainsi, la jupe 7e assure un guidage en translation de la bague 7 sur le corps 1. La jupe 7e permet en outre de confiner le ressort 8 dans le logement 1c, y compris lorsque le ressort 8 est comprimé du fait du mouvement de la bague 7 à l'encontre de l'effort F₈.

Sous l'effet de l'effort de rappel élastique F₈, la bague 7 est repoussée contre le circlips 9, de telle sorte que son bord avant 7d qui est en forme de jupe ou de manchon, recouvre l'extrémité avant de chacune des griffes 41 au point de la verrouiller efficacement à l'intérieur de la gorge 2d.

Au cours du mouvement d'accouplement représenté aux figures 3 à 5, le poussoir 3 à continué à pousser le clapet 24 à l'encontre de l'effort élastique F₂₈ à l'intérieur du corps 21, alors que le bord avant 21d du corps 21 a continué à repousser le clapet 4 à l'encontre de l'effort élastique F₅.

Lorsqu'il est nécessaire de désaccoupler les éléments A et B, il suffit de déplacer le fourreau 6 dans la direction de la flèche F₆ à la figure 6, de telle sorte que le circlips 9 repousse la bague 7 à l'encontre de l'effort F₈ généré par le ressort 8 au point de libérer les griffes 41 qui peuvent alors être extraites de la gorge 2d par une traction T₁ sur l'élément mâle B. Compte tenu de la forme des surfaces 2f et 41e, les griffes sont écartées et peuvent être retirées de la gorge 2d.

Lors de l'extraction de l'élément mâle B par rapport à l'élément femelle A, les ressorts 5 et 25 repoussent les clapets 4 et 24 vers leur position fermée, respectivement en appui sur les corps 2 et 21.

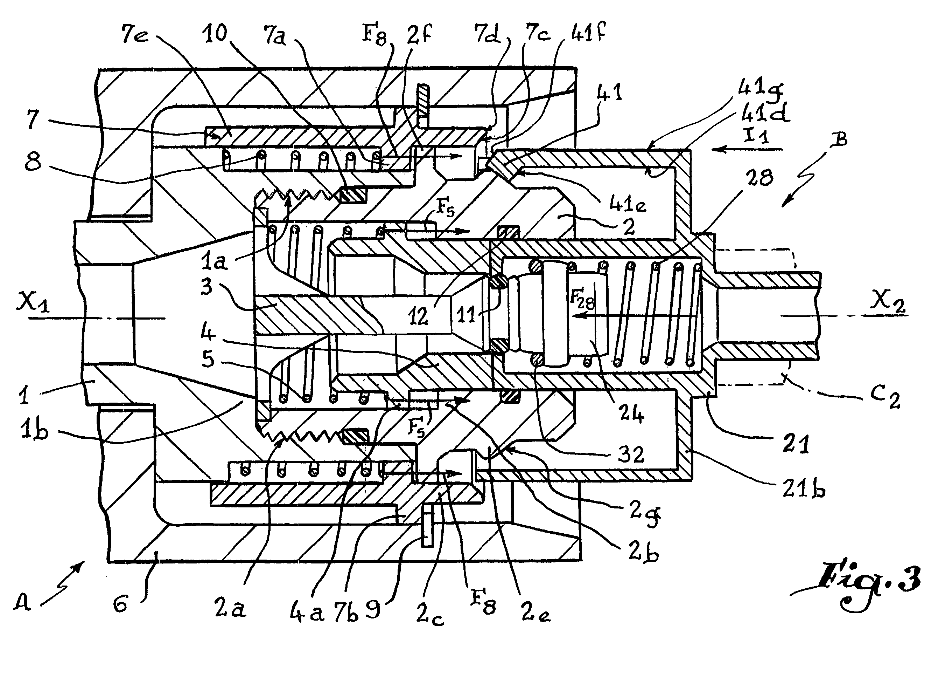

Comme il ressort de la figure 2, le corps 21 et les griffes 41 sont formés dans une unique pièce monobloc, en matière plastique injectée, de sorte que le prix de revient de l'élément mâle B est particulièrement attractif et qu'il peut être prévu pour être monté sur des appareils ou systèmes produits en grande série, tels que par exemple des véhicules automobiles ou des composants de tels véhicules.

L'élément femelle A peut être prévu métallique et est de conception relativement simple dans la mesure où il est à symétrie de révolution autour de l'axe X₁, sans billes ou griffes de verrouillage rapportées.

Le nombre et la répartition des griffes 41 autour de l'axe X₂ dépend de la rigidité recherchée pour l'accouplement réalisé grâce au raccord et résulte d'un choix de l'homme du métier.

L'invention permet donc de réaliser un raccord rapide de sécurité fonctionnant grâce à un mouvement instinctif du fourreau 6 et dont le prix de revient est particulièrement attractif alors que sa fiabilité est sensiblement améliorée par rapport aux dispositifs de l'état de la technique.

L'invention permet, en particulier, de prévoir d'équiper en grand nombre certains dispositifs avec l'élément portant les griffes, qui peut être obtenu par moulage de matière plastique, alors qu'un élément stationnaire métallique équipé du fourreau est utilisé avec un grand nombre d'éléments à griffes.

L'invention a été représentée avec un raccord femelle portant un fourreau de commande des moyens de verrouillage alors que l'élément mâle porte les griffes de verrouillage. Cependant, le fourreau de commande pourrait être prévu sur un élément mâle d'un raccord alors que des griffes pourraient être prévues sur l'élément femelle sans sortir du cadre de la présente invention.

## Revendications

1. Raccord rapide de sécurité pour la jonction amovible de canalisations (C₁, C₂) comprenant un premier (A) et un second (B) éléments propres à s'emmancher et à se verrouiller l'un à l'intérieur de l'autre, un mécanisme de verrouillage, commandé par un fourreau externe et mobile (6), étant apte à immobiliser axialement lesdits éléments l'un par rapport à l'autre, ledit fourreau étant disposé autour dudit premier élément, **caractérisé en ce que** ledit second élément (B) porte au moins une griffe (41) de verrouillage apte à coopérer avec une gorge radiale (2d) dudit premier élément (A) , alors que ledit premier élément porte une bague (7) de verrouillage de ladite griffe en position engagée dans ladite gorge.

2. Raccord selon la revendication 1, **caractérisé en ce que** ledit second élément (B) comprend plusieurs griffes (41) réparties autour d'un axe central (X₂) dudit second élément.

3. Raccord selon l'une des revendications 1 ou 2, **caractérisé en ce qu'**il comprend des moyens (8) de charge élastique (F₈) de ladite bague (7) vers une position où elle verrouille ladite griffe (41) dans ladite gorge (2d).

4. Raccord selon la revendication 3, **caractérisé en ce que** ladite bague (7) se prolonge par une jupe (7e) apte à entourer un logement (1c) formé sur une surface externe d'un corps (1) dudit premier élément (A) pour la réception d'un ressort (8) de rappel (F₈) de ladite bague (7) en position de verrouillage de ladite griffe (41).

5. Raccord selon l'une des revendications 3 ou 4, **caractérisé en ce que** ledit fourreau (6) porte une butée interne (9) vers laquelle ladite bague (7) est poussée par lesdits moyens (8) de charge élastique (F₈).

6. Raccord selon la revendication 5, **caractérisé en ce que** ladite bague (7) est pourvue d'une collerette radiale externe (7b) apte à venir en appui simple contre ladite butée (9) dudit fourreau (6).

7. Raccord selon l'une des revendications précédentes, **caractérisé en ce que** ladite griffe (41) est formée de façon monobloc avec un corps (21) dudit second élément (B).

8. Raccord selon l'une des revendications précédentes, **caractérisé en ce que** ledit second élément (B) comprend une jupe périphérique (21c) apte à entourer une partie (2) dudit premier élément (A) en position accouplée desdits premier et second éléments (A, B).

9. Raccord selon l'une des revendications précédentes, **caractérisé en ce que** ladite griffe (41) est pourvue d'un chanfrein externe d'extrémité (41f) alors que ladite bague (7) est pourvue d'un chanfrein (7c) orienté vers l'intérieur.

10. Raccord selon l'une des revendications précédentes, **caractérisé en ce que** ladite griffe (41) est pourvue d'un chanfrein interne d'extrémité (41c) alors qu'un corps (2) dudit premier élément (A) est pourvu d'une surface (2g) formant rampe inclinée apte à coopérer avec ledit chanfrein pour expandre radialement (E₁) ladite griffe lors de l'accouplement desdits premier et second éléments (A, B).

11. Elément (A) de raccord rapide de sécurité pour la jonction amovible de deux canalisations (C₁, C₂) destiné à s'emmancher et à se verrouiller avec un autre élément (B) dudit raccord, qui porte au moins une griffe de verrouillage (41) apte à coopérer avec une gorge radiale (2d) dudit élément (A), ledit élément (A) comprenant un mécanisme de verrouillage commandé par un fourreau mobile (6) et apte à immobiliser axialement lesdits éléments l'un par rapport à l'autre, **caractérisé en ce qu'**il comprend une bague (7) de verrouillage de ladite griffe (41) portée par l'autre élément (B), en position engagée dans ladite gorge radiale (2d) dudit élément (A) .

12. Elément (B) de raccord rapide de sécurité pour la jonction amovible de canalisations (C₁, C₂) destiné à s'emmancher et à se verrouiller avec un autre élément (A) dudit raccord, ledit autre élément comprenant un mécanisme de verrouillage, commandé par un fourreau mobile (6) et apte à immobiliser axialement lesdits éléments l'un par rapport à l'autre, une bague de verrouillage (7) d'au moins une griffe (41) de verrouillage portée par ledit élément (B) et une gorge radiale (2d), **caractérisé en ce que** ladite griffe (41) de verrouillage est apte à coopérer avec ladite gorge radiale (2d) dudit autre élément (A) et à être verrouillée en position engagée dans ladite gorge par ladite bague de verrouillage (7) dudit autre élément.

## Patentansprüche

1. Sicherheitsschnellkupplung für die lösbare Verbindung von Rohrleitungen (C₁, C₂) mit einem ersten (A) und einem zweiten (B) Element, die geeignet sind, ineinander einzugreifen und sich zu verriegeln, einem Verriegelungsmechanismus, der durch eine äußere und bewegliche Hülse (6) gesteuert wird, die fähig ist, die Elemente axial zueinander festzulegen, wobei die Hülse um das erste Element angeordnet ist, **dadurch gekennzeichnet, dass** das zweite Element (B) mindestens einen Verriegelungshaken (41) trägt, der mit einer Radialnut (2d) des ersten Elements (A) zusammenarbeiten kann, während das erste Element einen Verriegelungsring (7) für den in der Eingriffsposition mit der Nut befindlichen Haken trägt.

2. Kupplung nach Anspruch 1, **dadurch gekennzeichnet, dass** das zweite Element (B) mehrere Haken (41) umfasst, die um eine Mittelachse (X₂) des zweiten Elements herum verteilt sind.

3. Kupplung nach einem der Ansprüche 1 oder 2, **dadurch gekennzeichnet, dass** sie Mittel (8) zur elastischen Vorspannung (F₈) des Ringes (7) in eine Position, in der er den Haken (41) in der Nut (2d) verriegelt, umfasst.

4. Kupplung nach Anspruch 3, **dadurch gekennzeichnet, dass** der Ring (7) sich um eine Schürze (7e) verlängert, die geeignet ist, einen auf der Außenfläche eines Körpers (1) des ersten Elements (A) für die Aufnahme einer Rückstellfeder (8, F₈) für den Ring (7) in der Verrieglungsposition des Hakens (41) ausgebildeten Sitz (1c) zu umgreifen.

5. Kupplung nach einem der Ansprüche 3 oder 4, **dadurch gekennzeichnet, dass** die Hülse (6) einen Innenanschlag (9) trägt, gegen den der Ring (7) durch die Mittel (8) zur elastischen Vorspannung (F₈) gedrückt wird.

6. Kupplung nach Anspruch 5, **dadurch gekennzeichnet, dass** der Ring (7) mit einem radialen Außenkragen (7b) versehen ist, der geeignet ist, gegen den Anschlag (9) der Hülse (6) in Anlage zu kommen.

7. Kupplung nach einem der vorhergehenden Ansprüche, **dadurch gekennzeichnet, dass** der Haken (41) einstückig mit einem Körper (21) des zweiten Elements (B) geformt ist.

8. Kupplung nach einem der vorhergehenden Ansprüche, **dadurch gekennzeichnet, dass** das zweite Element (B) eine Umfangsschürze (21c) umfasst, die geeignet ist, einen Teil (2) des ersten Elements (A) in der verkuppelten Stellung des ersten und zweiten Elements (A, B) zu umgeben.

9. Kupplung nach einem der vorhergehenden Ansprüche, **dadurch gekennzeichnet, dass** der Haken (41) am Ende mit einer Außenschräge (41f) versehen ist, während der Ring (7) mit einer nach innen gerichteten Schräge (7c) versehen ist.

10. Kupplung nach einem der vorhergehenden Ansprüche, **dadurch gekennzeichnet, dass** der Haken (41) am Ende mit einer Innenschräge (41c) versehen ist, während ein Körper (2) des ersten Elements (A) mit einer Fläche (2g) versehen ist, die eine geneigte Rampe bildet und geeignet ist, mit der Schräge zusammenzuarbeiten, um radial (E₁) den Haken während des Kuppelvorgangs des ersten und zweiten Elements (A, B) aufzuweiten.

11. Element (A) einer Sicherheitsschnellkupplung für die lösbare Verbindung zweier Rohrleitungen (C₁, C₂), das dazu dient, mit einem anderen Element (B) der Kupplung in Eingriff zu treten und sich mit ihm zu verriegeln, das mindestens einen Verriegelungshaken (41) trägt, der mit einer Radialnut (2d) des Elements (A) zusammenarbeiten kann, wobei das Element (A) einen Verriegelungsmechanismus umfasst, der von einer beweglichen Hülse (6) gesteuert wird und axial die Elemente zueinander festlegen kann, **dadurch gekennzeichnet, dass** es einen Verriegelungsring (7) für den von dem anderen Element (B) getragenen Haken (41) in einer Eingriffsposition mit der Radialnut (2d) des Elementes (A) umfasst.

12. Element (B) einer Sicherheitsschnellkupplung für die lösbare Verbindung von Rohrleitungen (C₁, C₂), das dazu dient, mit einem anderen Element (A) der Kupplung in Eingriff zu treten und sich mit ihm zu verriegeln, wobei das andere Element einen Verriegelungsmechanismus, der durch eine bewegliche Hülse (6) gesteuert wird und axial die Elemente zueinander festlegen kann, einen Verriegelungsring (7) für mindestens einen von dem Element (B) getragenen Verriegelungshaken (41) und eine Radialnut (2d) umfasst, **dadurch gekennzeichnet, dass** der Verrieglungshaken (41) mit der Radialnut (2d) des anderen Elements (A) zusammenarbeiten und in Eingriffsposition mit der Nut durch den Verriegelungsring (7) des anderen Elements verriegelt werden kann.

## Claims

1. Quick acting safety coupling for the disconnectable connection of pipe lines (C₁, C₂), comprising a first element (A) and a second element (B) which are suitable for pressing on and locking one inside the other, a locking mechanism, which is actuated by an external and movable sleeve (6), being able to immobilise said elements axially with respect to each other, said sleeve being disposed around said first element, **characterised in that** said second element (B) carries at least one locking claw (41) which is able to cooperate with a radial groove (2d) of said first element (A), whilst said first element carries a ring (7) for locking said claw in the engaged position in said groove.

2. Coupling according to claim 1, **characterised in that** said second element (B) comprises a plurality of claws (41) which are distributed about a central axis (X₂) of said second element.

3. Coupling according to one of the claims 1 or 2, **characterised in that** it comprises means (8) for elastic loading (F₈) of said ring (7) towards a position in which it locks said claw (41) in said groove (2d).

4. Coupling according to claim 3, **characterised in that** said ring (7) is extended by a skirt (7e) which is able to surround a housing (1c) formed on an external surface of a body (1) of said first element (A) for receiving a return (F₈) spring (8) of said ring (7) in the locking position of said claw (41).

5. Coupling according to one of the claims 3 or 4, **characterised in that** said sleeve (6) carries an internal limit stop (9), towards which said ring (7) is pushed by said means (8) for elastic loading (F₈).

6. Coupling according to claim 5, **characterised in that** said ring (7) is provided with a radial, external collar (7b) which is able to be supported simply on said limit stop (9) of said sleeve (6).

7. Coupling according to one of the preceding claims, **characterised in that** said claw (41) is formed in monobloc fashion with a body (21) of said second element (B).

8. Coupling according to one of the preceding claims, **characterised in that** said second element (B) comprises a peripheral skirt (21c) which is able to surround a portion (2) of said first element (A) in the coupled position of said first and second elements (A, B).

9. Coupling according to one of the preceding claims, **characterised in that** said claw (41) is provided with an external end chamfer (41f), whilst said ring (7) is provided with a chamfer (7c) which is orientated towards the interior.

10. Coupling according to one of the preceding claims, **characterised in that** said claw (41) is provided with an internal end chamfer (41c), whilst a body (2) of said first element (A) is provided with a surface (2g) which forms an inclined ramp which is able to cooperate with said chamfer in order to expand said claw radially (E₁) during the coupling of said first and second elements (A, B).

11. Element (A) of a quick acting safety coupling for the disconnectable connection of two pipe lines (C₁, C₂), intended for pressing on and locking with another element (B) of said coupling, which carries at least one locking claw (41) which is able to cooperate with a radial groove (2d) of said element (A), said element (A) comprising a locking mechanism which is actuated by a movable sleeve (6) and is able to immobilise said elements axially with respect to each other, **characterised in that** it comprises a ring (7) for locking said claw (41) which is carried by the other element (B), in the engaged position in said radial groove (2d) of said element (A).

12. Element (B) of a quick acting safety coupling for the disconnectable connection of two pipe lines (C₁, C₂), intended for pressing on and locking with another element (A) of said coupling, said other element comprising a locking mechanism which is actuated by a movable sleeve (6) and is able to immobilise said elements axially with respect to each other, a ring (7) for locking at least one locking claw (41) carried by said element (B) and a radial groove (2d), **characterised in that** said locking claw (41) is able to cooperate with said radial groove (2d) of said other element (A) and to be locked in the engaged position in said groove by said locking ring (7) of said other element.
